**Europäisches Patentamt**

**European Patent Office**

**Office européen des brevets**

(19)

(11) Veröffentlichungsnummer: **0 174 513**
**B1**

## EUROPÄISCHE PATENTSCHRIFT

(12)

(45) Veröffentlichungstag der Patentschrift:
**10.01.90**

(51) Int. Cl.⁴: **H 02 K 15/10**

(21) Anmeldenummer: **85110183.2**

(22) Anmeldetag: **14.08.85**

(54) **Verfahren und Vorrichtung zum Auskleiden der Nuten von Stator- oder Rotorblechpaketen für elektrische Maschinen mit Isolierhülsen.**

(30) Priorität: **31.08.84 DE 3432038**

(43) Veröffentlichungstag der Anmeldung:
**19.03.86 Patentblatt 86/12**

(45) Bekanntmachung des Hinweises auf die Patenterteilung:
**10.01.90 Patentblatt 90/2**

(84) Benannte Vertragsstaaten:
**DE FR GB IT**

(56) Entgegenhaltungen:
**DE-A- 3 013 011**
**DE-B- 1 763 668**
**US-A- 1 529 741**

(73) Patentinhaber: **STATOMAT-GLOBE Machinenfabrik GmbH, An der Rosenhelle 4, D-6369 Niederdorfelden (DE)**

(72) Erfinder: **Schultes, Otto, Ing., Am Hang 5, D-5431 Staudt (DE)**

(74) Vertreter: **Jochem, Bernd, Dipl.-Wirtsch.-Ing. et al, Patentanwälte Beyer & Jochem Staufenstrasse 36, D-6000 Frankfurt/Main (DE)**

EP 0 174 513 B1

## Beschreibung

Die Erfindung betrifft ein Verfahren zum Auskleiden der Nuten von Stator- oder Rotorblechpaketen für elektrische Maschinen mit Isolierhülsen sowie eine Vorrichtung zur Durchführung dieses Verfahrens. Sie geht aus vom Stand der Technik gemäss US-PS 2 340 291. Die dort beschriebene Nutenisoliermaschine wird bis heute im Prinzip unverändert gebaut. Das Arbeitsverfahren ist dabei wie folgt:

Ein Isoliermaterialstreifen, dessen Breite um ein bestimmtes Mass grösser ist als die Höhe z. B. eines bestimmten Statorblechpakets, wird meistens an seinen Rändern umgebogen und in dieser Form einem kombinierten Schneid- und Formwerkzeug zugeführt. Die umgebogenen Ränder ergeben später die ausserhalb der Statornuten liegenden sogenannten Kragen der Isolierhülsen. Von dem Isoliermaterialstreifen mit umgebogenen Rändern wird durch das kombinierte Schneid- und Formwerkzeug mit einem einzigen Hub jeweils eine Abwicklungslänge einer Isolierhülse abgeschnitten und mittels einer Matrize und eines mit dieser zusammenwirkenden Formstempels in die dem Querschnitt der auszukleidenden Nut entsprechende U-förmige Gestalt verformt. Anschliessend wird die Isolierhülse durch einen Einschiessstempel axial aus der Matrize in die zugeordneten, in Flucht gebrachte Statornut geschoben, dann das Statorblechpaket um eine Nutteilung weitergedreht und die nächste Isolierhülse in derselben Weise erzeugt und eingeschoben usw. Die schrittweise Drehbewegung des Statorblechpakets und die hin- und hergehenden Bewegungen des Messers und Formstempels einerseits sowie des Einschiessstempels andererseits sind durch ein gemeinsames Kurven- und Zahnrädergetriebe synchronisiert. Die Zykluszeit beträgt nur noch etwa 1/4 Sekunde und lässt sich bei einer solchen Maschine kaum noch weiter senken. Es blieb daher, wenn noch kürzere Fertigungszeiten erzielt werden sollten, nur der Ausweg, auf zwei Nuten-Isoliermaschinen parallel zu arbeiten.

Der Erfindung liegt die Aufgabe zugrunde, eine ganz wesentliche Beschleunigung der Produktionsgeschwindigkeit mit minimalem zusätzlichen Aufwand zu erreichen, und diese Aufgabe wird verfahrensmässig dadurch gelöst, dass bei jedem Arbeitstakt die Abwicklungslänge von zwei Isolierhülsen vom Vorratsstreifen abgetrennt wird und beide Isolierhülsen gleichzeitig geformt und die Nuten eingeschoben werden.

Besonders einfache Bewegungsverhältnisse ergeben sich bei dem erfingungsgemässen Verfahren dann, wenn die beiden Isolierstreifenabschnitte parallel zueinander und zu der Symmetrieebene der beiden Nuten in die Form gedrückt werden und dann in Anbetracht der Tatsache, dass die Statornuten nicht parallel, sondern radial ausgerichtet sind, beim Schieben der Isolierhülsen aus der Form in die Nuten auf dem Zwischenweg jeweils der äussere Schenkel der Isolierhülsen so weit an den inneren Schenkel herangeführt wird, bis die beiden Isolierhülsen mit den zugeordneten Nuten fluchten.

Es müssten verhältnismässig aufwendige Führungs- und Steuerungselemente eingesetzt werden, wenn man die beiden gleichzeitig parallel verarbeiteten Isolierstreifenabschnitte jeweils erst auf die vorbestimmte Länge schneiden und dann formen würde. In bevorzugter Ausführung des erfindungsgemässen Verfahrens wird zunächst nur ein einziger Schnitt ausgeführt, mit dem die gesamte Länge der beiden Isolierstreifenabschnitte vom Streifenvorrat abgeschnitten wird. Dann beginnt der Formvorgang der beiden Isolierhülsen, und erst im Verlauf des Formvorgangs erfolgt die Trennung zwischen den beiden Isolierstreifenabschnitten.

Aus konstruktiven Gründen ist es vorteilhaft, wenn die beiden gleichzeitig ausgekleideten Nuten den dreifachen Nuten-Teilungsabstand voneinander haben und das Stator- oder Rotorblechpaket nach jedem Arbeitstakt relativ zur Form um den doppelten Teilungsabstand gedreht wird. Damit ergibt sich unter den normalen praktischen Bedingungen ein ausreichender, aber nicht zu grosser Abstand zwischen den beiden parallel arbeitenden Formwerkzeugteilen. Es lassen sich auf diese Weise mit jeweils konstanten Drehschaltschritten alle Statoren mit einer durch 2 teilbaren Anzahl Nuten gleichen Querschnitts isolieren.

Eine Vorrichtung zur Durchführung des neuen Verfahrens hat in herkömmlicher Weise ein Formwerkzeug, bestehend aus einer Matrize und einer Stempelplatte mit einem Formstempel, sowie einen quer zu diesem bewegbaren Einschiessstempel zum Schieben der Isolierhülsen aus der Matrize in die Nuten und ist dadurch gekennzeichnet, dass an der Stempelplatte zwei Formstempel und dazwischen ein Messer angebracht sind, in der Matrize zwei Formnuten ausgebildet und die darin geformten Isolierhülsen gleichzeitig durch zwei Einschiessstempel in zwei Nuten des Stator- oder Rotorblechpakets einführbar sind.

Sollte es sich erweisen, dass bei einem bestimmten Statorblechpaket die zu isolierenden Zweiergruppen von Nuten nicht gleichmässig über den Umfang verteilt sind, so kann eine Vorrichtung eingesetzt werden, welche bei jedem Schneid- und Formvorgang eine Umdrehung ausführende Kurventrommel mit Steuerkurven für Form- und Einschiessstempel sowie ein über einen Malteserkreuzantrieb angetriebenes Schaltgetriebe aufweist und bei der zur Einstellung zweier unterschiedlicher Drehzahlverhältnisse zwischen der Steuertrommel und einer Stator- und Rotorblechpaketaufnahme das Schaltgetriebe durch eine weitere Steuerkurve an der Steuertrommel umschaltbar ist. Damit wurde eine einfache Zwangsführung gefunden, die zuverlässig Fehlfunktionen und falsche Bewegungen verhindert.

In bevorzugter praktischer Ausführung sitzen die die Schaltbewegung ausführenden Getrieberäder des Schaltgetriebes drehfest auf einem axial verschieblichen Teil der Malteserkreuzwelle, an welchen, über den Umfang verteilt, mehrere abwechselnd mit der weiteren Steuerkurve zusammenwirkende, sich radial erstreckende Mitnehmer jeweils in einer von zwei unterschiedlichen axialen Positionen befestigbar sind, wobei diese Mitnehmer je nach ihrer axialen Position an einer von zwei gegenüberliegenden, axial gegenläufigen Führungsflächen der Steuerkurve zur Anlage kommen.

Die Erfindung wird nachstehend anhand der Zeichnung näher erläutert. Es zeigen:

Fig. 1 eine Draufsicht auf ein kombiniertes Schneid- und Formwerkzeug für Isolierhülsen bei einer Nutenisoliermaschine;

Fig. 2 einen senkrechten Querschnitt nach Schnittlinie II–II in Fig. 1;

Fig. 3 und 4 Seitenansicht und Draufsicht, zum Teil im Schnitt des Malteserkreuzantriebs für die Drehschaltbewegung des Statorblechpakets, wobei zusätzlich eine Schalteinrichtung zum axialen Verschieben eines Teils der Malteserkreuzwelle vorhanden ist;

Fig. 5 einen Querschnitt durch die Werkstückaufnahme, welche die Statorblechpakete während der Isolierung der Nuten trägt und weiterschaltet sowie das zugehörige Schaltgetriebe.

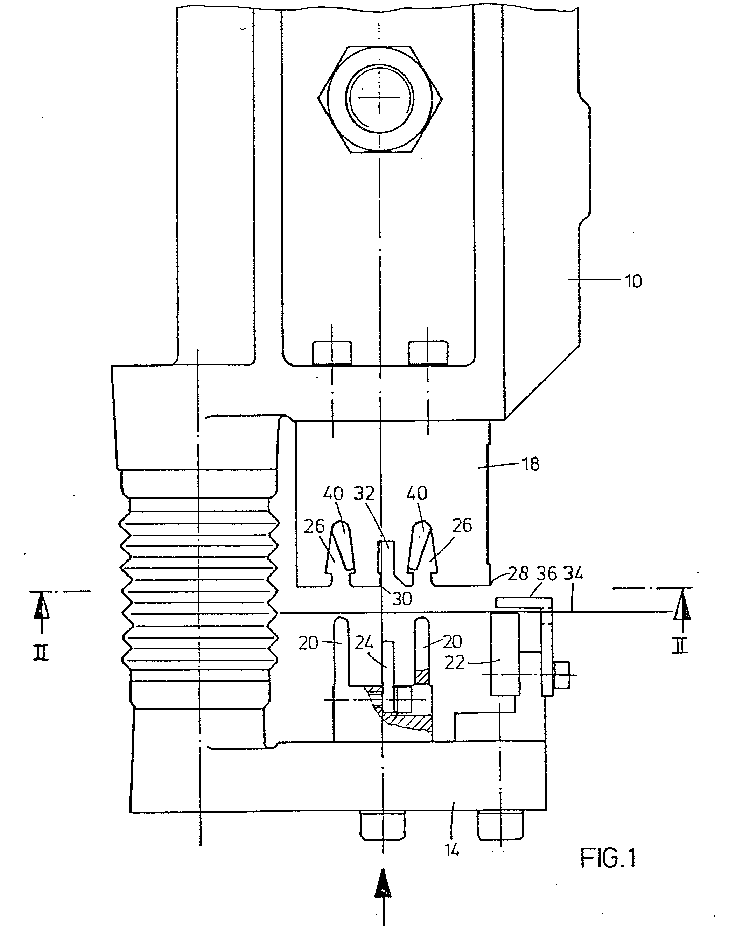

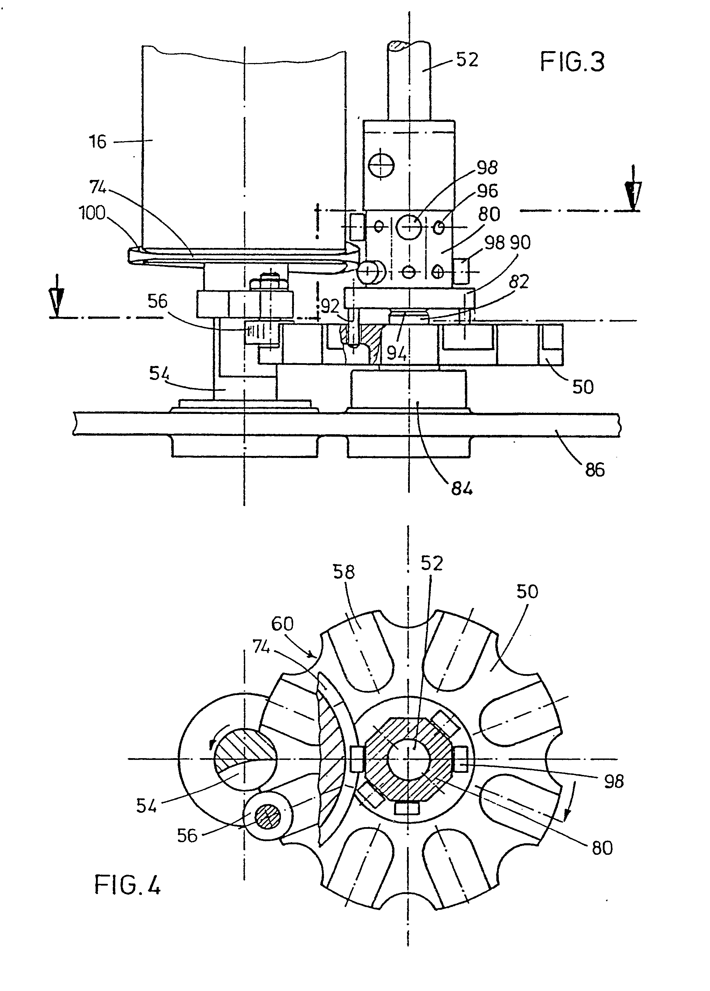

Da die Erfindung eine Verbesserung der Vorrichtung gemäss US-PS 2 340 291 darstellt, kann sich die nachstehende Beispielsbeschreibung auf diejenigen Einzelheiten beschränken, durch die sich die Erfindung von dem genannten Stand der Technik unterscheidet. dies ist zunächst gemäss Fig. 1, 2 und 5 die Ausbildung des Schneid- und Formwerkzeugs sowie des Einschiessstempels. Das Schneid- und Formwerkzeug ist in bekannter Weise an einem Säulenführungsgestell befestigt, dessen festes Unterteil mit 10 und dessen von verschieblichen Führungssäulen 12 getragenes bewegliches Oberteil mit 14 bezeichnet ist. Der hin- und hergehende Antrieb des Oberteils 14 erfolgt in bekannter Weise über nicht gezeigte Hebel und eine Führungskurve auf einer in Fig. 3 angedeuteten Kurventrommel 16. Dieser in der US-PS 2 340 291 beschriebene Antriebsmechanismus bildet nicht Teil der Erfindung.

Zur Formung der Isolierhülsen ist am Säulenführungsgestell-Unterteil 10 eine ein- oder mehrteilige Matrize 18 befestigt, während das Oberteil 14 in ein- oder mehrteiliger Ausbildung zwei Formstempel 20 sowie ausserdem eine seitliche und eine mittlere Schneidplatte 22 bzw. 24 trägt. Die beiden Formstempel 20 wirken mit gegenüberliegenden Formnuten 26 in der Matrize 18 zusammen, die seitliche Schneidplatte 22 mit einer seitlichen Scherkante 28 und die mittlere Schneidplatte 24 mit einer mittleren Scherkante 30 an einer mittleren Nut 32 in der Matrize. Wie gezeigt, ist die Nut 32 breiter als die Schneidplatte 24 und ausserdem an der der Schneidkante 30 gegenüberliegenden Längskante angeschrägt oder abgerundet. Wie ebenfalls aus der Zeichnung hervorgeht, stehen die freien Enden der Formstempel 20 gegenüber der mittleren Schneidplatte 24 vor, während die seitliche Schneidplatte 22 gegenüber den Formstempeln 20 vorsteht. Auf diese Weise kommen bei einer geraden Vorderkante der Matrize 18 beim Vorschub des Oberteils 14 in Richtung zum Unterteil 10 des Säulenführungsgestells zuerst die seitliche Schneidplatte 22, dann die Formstempel 20 und dann, während des Formvorgangs die mittlere Schneidplatte 24 zur Wirkung.

Das zu schneidende und zu formende streifenförmige Isoliermaterial ist in Fig. 1 mit 34 bezeichnet. Es wird in bekannter Weise von einer Vorratsrolle abgezogen und an den seitlichen Rändern fortlaufend umgebogen, bevor es mit umgebogenen Rändern dem in Fig. 1 gezeigten Schneid- und Formwerkzeug zugeführt wird. Ein neben der seitlichen Schneidplatte 22 befestigter Winkel 36 mit einem gestrichelt gezeigten Führungsschlitz sorgt dafür, dass das streifenförmige Material 34 in jeder Bewegungsphase des beweglichen Werkzeugteils an der Schneidplatte 22 gehalten und an dieser entlang geführt wird.

Im Beispielsfall nach Fig. 1 sind die vorstehend beschriebenen Werkzeugteile mittels Schrauben am Säulenführungsgestell befestigt, wobei getrennte Halterungen die Formstempel 20 und die seitliche Schneidplatte 22 tragen. Die mittlere Schneidplatte 24 ist an der Halterung der Formstempel 20 festgeschraubt. Es versteht sich, dass alternativ die zuletzt genannten Teile auch jeweils einzeln am beweglichen Oberteil 14 des Säulenführungsgestells oder auch zusammen an einer einzigen Halterung befestigt sein könnten.

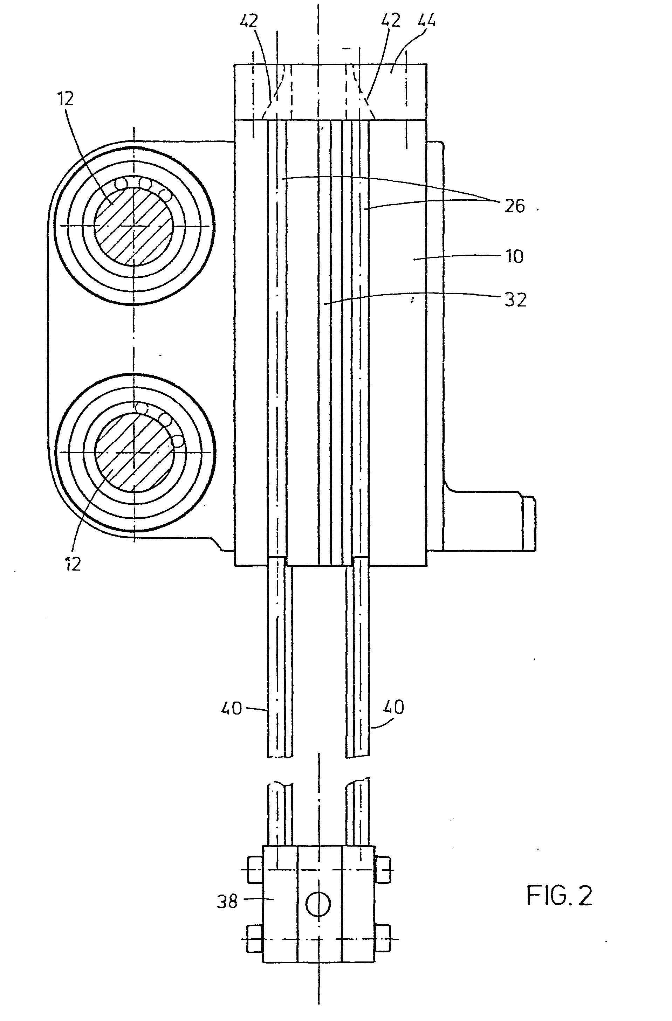

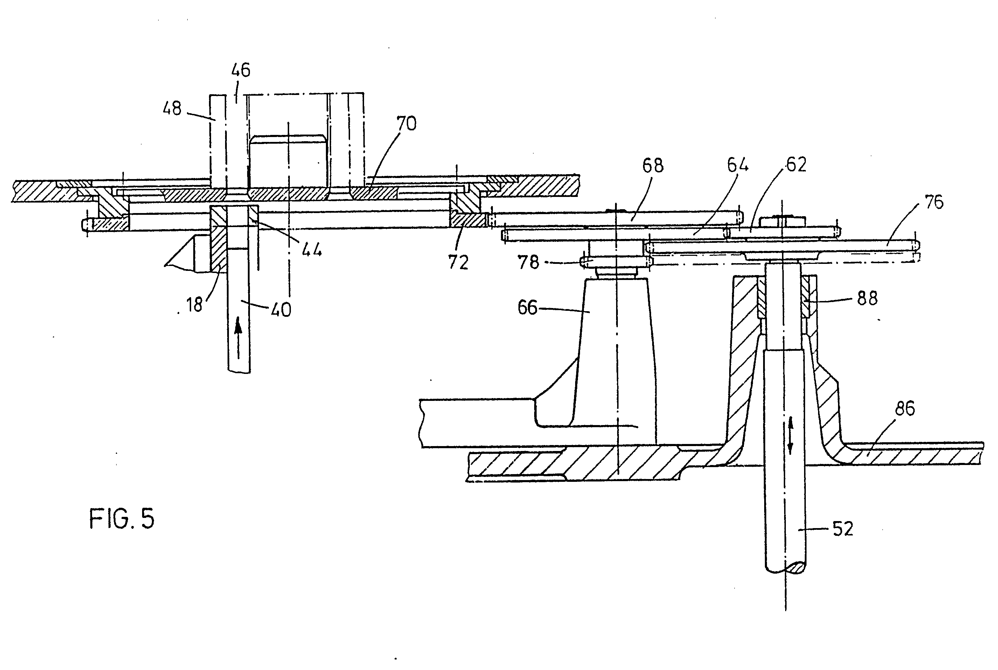

Aus Fig. 1 in Verbindung mit Fig. 2 und 5 ist ersichtlich, dass von unten her zwei an einer gemeinsamen Halterung 38 befestigte Einschiessstempel 40 in die Formnuten 26 einfahren können, um die darin geformten Isolierhülsen durch schräge Nuten 42 in einem Formelement 44 hindurch nach oben jeweils gleichzeitig in zwei Nuten 46 eines Statorblechpakets 48 zu schieben. Auch der hin- und hergehende Antrieb der Halterung 38 mit den Einschiessstempeln 40 erfolgt, wie aus der US-PS 2 340 291 bekannt, über ein Hebelgetriebe durch eine nichtgezeigte Führungskurve auf der Kurventrommel 16.

Der bisher beschriebene Teil der Vorrichtung funktioniert wie folgt:

Zunächst wird in der in Fig. 1 dargestellten Ausgangslage der Werkzeugteile der Isoliermaterialstreifen 34 so weit nach links vorgeschoben, dass die über die Schneidkante 28 hinausreichende Länge gleich der zweifachen Abwicklungslänge einer Nutisolierhülse ist. Wenn daraufhin das bewegliche Oberteil 14 des Säulenführungsgestells zu dessen Unterteil 10 hin vorfährt, schneidet zunächst die seitliche Schneidplatte 22 vom Isoliermaterialstreifen an der Schneidkante 28 die doppelte Abwicklungslänge einer Nutisolierhülse ab. Fast gleichzeitig oder unmittelbar anschliessend beginnen die Formstempel 20, den Isolierstreifenabschnitt in die Formnuten 26 zu ziehen. Damit dieser nicht vorher zwischen den Werkzeugteilen hindurchrutscht, kann ggf. eine nicht gezeigte Unterstützung angebracht sein. Da das Material der beiden zu bildenden Isolierhülsen zunächst noch in der Mitte verbunden ist, wird beim Eindringen der Formstempel 20 in die Formnuten 26 zuerst nur Streifenmaterial von den beiden äusseren Seiten her in die Formnuten 26 hineingezogen. Im Verlauf des Formvorgangs trifft dann die mittlere Schneidplatte 24 an der Schneidkante 30 auf das Isoliermaterial und durchtrennt es auf der Mitte zwischen den beiden Formnuten 26. Von diesem Moment an wird das Isoliermaterial jeweils auf beiden Seiten gleichmässig in jede Formnut 26 hineingezogen. Damit hierbei die mittlere Schneidplatte 24 das Hineinziehen des Isoliermaterials in die mit Bezug auf Fig. 1 rechte Formnut 26 nicht behindert, ist die Nut 32 breiter als die Schneidplatte 24 ausgebildet und mit der gezeigten Abschrägung am rechten Rand versehen. Im übrigen entspricht der Formvorgang, der bei der Erfindung in beiden Formnuten 26 gleichzeitig und parallel stattfindet, dem bekannten Formvorgang bei Verwendung einer einzigen Formnut und eines einzigen Formstempels 20.

Nach der Formung der Isolierhülsen werden die Formstempel 20 wieder aus den Formnuten 26 herausgezogen, und anschliessend werden die Einschiessstempel 40 mit ihren freien Enden nach oben axial durch die Formnuten 26 und die Nuten 42 im Formelement 44 verfahren, wobei die in den Formnuten 26 gebildeten Isolierhülsen in die Nuten 46 des Statorblechpakets 48 geschoben werden. Der Arbeitszyklus wird vollendet, indem die Einschiessstempel 40 wieder in die in Fig. 2 gezeigte Ausgangslage zurückgezogen, das Statorblechpaket 48 in eine solche Lage weitergedreht wird, dass wiederum zwei leere Nuten des Statorblechpakets mit den Nuten 42 des Formelements fluchten, und der Isoliermaterialstreifen 34 ebenfalls wieder in die Ausgangslage nach Fig. 1 vorgeschoben wird.

Abstand, Querschnitt und relative Anordnung der Formnuten 26 und Einschiessstempel 40 sowie damit auch der Formstempel 20, der Schneidplatte 24 und der Nuten 42 im Formelement 44 richten sich im Einzelfall nach der Anordnung und dem Querschnitt der beiden in einem Arbeitsgang auszukleidenden Nuten 46 des Statorblechpakets 48. Liegen die beiden auszukleidenden Statornuten unmittelbar nebeneinander, so müssen auch die Formnuten 26 und Formstempel 20 entsprechend dicht nebeneinander angeordnet werden. Weil sich dann in der Ausgangssituation nach Fig. 1 praktisch kein Isoliermaterial zwischen den beiden Formnuten 26 befindet, welches in die unmittelbar nebeneinander liegenden Formnuten 26 beim Formvorgang hineingezogen werden könnte, muss demnach praktisch die gesamte Abwicklungslänge der Isolierhülsen jeweils von der äusseren Seite in die Formnut 26 hineingezogen werden, und die mittlere Schneidplatte 24 darf erst am Ende der Vorschubbewegung der Formstempel 20 das Isoliermaterial an der Schneidkante 30 durchtrennen. Liegen dagegen die beiden gleichzeitig auszukleidenden Statornuten um ein mehrfaches der Nutteilung auseinander, d.h., befinden sich zwischen den beiden gleichzeitg auszukleidenden Statornuten jeweils noch andere Statornuten, so ergibt sich ebenso wie bei einer grossen Nutteilung ein grösserer Zwischenabstand zwischen den Formnuten 26. Da in diesem Fall mehr Isoliermaterial aus dem Bereich zwischen den beiden Formnuten 26 in diese hineingezogen werden muss, muss auch die Vorderkante der mittleren Schneidplatte 24 relativ zum freien Ende der Formstempel 20 weiter vorgeschoben sein und während des Formvorgangs früher an der Schneidkante 30 wirksam werden. In der gezeigten einfachen Ausführung der Werkzeugteile des Formwerkzeugs, d.h. ohne zusätzliche Bremsbacken aussen neben den Formstempeln 20, können die Formnuten 26 und Formstempel 20 maximal einen mittleren Abstand von der Grösse der Abwicklungslänge eineer Isolierhülse haben. Dann muss der Isolierstreifenabschnitt vor oder unmittelbar bei Beginn des Formvorgangs zwischen den beiden Formnuten 26 durchtrennt werden, damit die Formstempel 20 jeweils eine halbe Abwicklungslänge der Isolierhülse aus dem Bereich zwischen den beiden Formnuten 26 und von der äusseren Seite in die Formnut 26 hineinziehen können.

Günstige räumliche Verhältnisse für die Werkzeugteile erheben sich, wenn bei Statorblechpaketen mit etwa 24 bis 48 Nuten jeweils zwei im Abstand einer dreifachen Nutteilung liegende Nuten gleichzeitig mit Isolierhülsen ausgekleidet werden, wobei sich also zwischen den beiden auszukleidenden Nuten jeweils zwei weitere Nuten befinden, die in diesem Arbeitsgang nicht ausgekleidet werden. Bei einer durch die Zahl 2 teilbaren Anzahl identischer Statornuten kann bei dreifachem Teilungsabstand der in einem Arbeitszyklus auszukleidenden Nuten der Stator mit gleichmässigen Drehbewegungen zwischen den Arbeitszyklen weitergeschaltet werden, wenn jede Drehbewegung der doppelten Nutteilung entspricht.

Die besonders einfache Bauform des erfindungsgemässen Formwerkzeugs beruht darauf, dass die Formnuten 26 und Formstempel 20 parallel ausgerichtet sind und letztere geradlinig bewegt werden. Darin liegt insofern eine Besonderheit, als die Nuten 46 des Stators 48 oder auch eines Rotors radial ausgerichtet sind. Der Antrieb für zwei relativ zueinander radial bewegbare Formstempel wäre wesentlich komplizierter als bei der im Ausführungsbeispiel gezeigten parallelen, geradlinigen Bewegung der beiden Formstempel 20. Es müssen im letzteren Fall zwar die in den Formnuten 26 geformten Isolierhülsen vor der Einführung in die Nuten 46 des Statorblechpakets in eine andere Lage gebracht werden, diese Verlagerung während des Einschliessvorgangs bereitet jedoch keine Schwierigkeiten, da es hierfür genügt, zwischen der Matrize 18 und dem Statorblechpaket 48 das Formelement 44 anzuordnen, dessen Nuten 42 so schräg verlaufen, dass sie einen Übergang zwischen den Formnuten 26 und den Nuten 46 des Statorblechpakets 48 bilden. Normalerweise kann sogar jeweils eine der beiden Flanken jeder Formnut 26 sowie der Nutgrund mit der entsprechenden Flanke und dem Nutgrund der Statornut 46 fluchten, so dass jeweils nur der nicht an der fluchtenden Nutflanke anliegende Schenkel der Isolierhülse mittels der Nut 42 im Formelement 44 aus seiner in der Formnut 26 eingenommenen Lage in die zum Einschieben in die Statornut 46 erforderliche Lage gebracht werden muss. Wie sich aus Fig. 1 und 2 ergibt, haben auch die Einschliessstempel 40 einen solchen Querschnitt und eine solche Anordnung, dass sie nur an der mit der Wand der Statornut 46 fluchtenden Flanke der Formnut 26 sowie an deren Notgrund anliegen, nicht jedoch an den äusseren Flanken der Formnuten 26. Dieser im Vergleich zum Querschnitt der Formnuten 26 verkleinerte Querschnitt der Einschliessstempel 40 erlaubt es, diese auch durch die einseitig schrägen Nuten 42 des Formelements zu schieben, genügt aber andererseits auch, um die Isolierhülsen zuverlässig in das Statorblechpaket zu schieben.

Durch die gleichzeitige Erzeugung und Einführung von jeweils zwei Isolierhülsen in Nuten des Statorblechpakets wird die bisher zum Isolieren der Nuten benötigte Fertigungszeit halbiert. Um auf dem erfindungsgemässen Wege zu diesem Ergebnis zu gelangen, bedarf es keiner zusätzlichen Führungs-, Antriebs- und Steuerungsmittel, sondern lediglich verhältnismässig geringfügiger Änderungen am Form- und Schneidwerkzeug, die kostenmässig praktisch nicht ins Gewicht fallen. Ausserdem können Vorrichtungen, mit denen bisher während eines Arbeitszyklus jeweils nur eine Nut ausgekleidet wurde, ohne weiteres durch Austausch lediglich der beschriebenen besonderen Werkzeugteile umgerüstet werden.

Nicht immer sind die identischen Statornuten gleichmässig über den Umfang der Statorbohrung verteilt, insbesondere dann nicht, wenn ein Stator mehrere im Querschnitt unterschiedliche Nuten hat. Da in diesem Fall oft die Abstände zwischen Nuten einer bestimmten Grösse wechseln, d.h. unterschiedliche Vielfache der Nutteilung betragen, ergibt sich bei bekannten Isoliermaschinen der gattungsgemässen Art ein Zeitverlust daraus, dass das Getriebe das Statorblechpaket gleichbleibend Schritt für Schritt um die Nutenteilung weiterschaltet, und hierfür jedesmal die Zeit eines vollen Arbeitszyklus braucht, anstatt im rhythmischen Wechsel ein- oder mehrmals einen kleinen und dann in bestimmter Reihenfolge einen grösseren Schaltschritt über mehrere Nutenteilungen hinweg auszuführen. Da dieses Problem unterschiedlicher Winkelabstände zwischen den nacheinander auszukleidenden Nuten eines Statorblechpakets verstärkt auftritt, wenn jeweils zwei Nuten gleichzeitig ausgekleidet werden, weil dann ggf. beim schrittweisen Weiterschalten des Statorblechpakets in Drehrichtung über bereits ausgekleidete Nuten hinweggesprungen werden muss, wird unter Hinweis auf Fig. 3 bis 5 auch für dieses Problem eine einfache mechanische Lösung vorgeschlagen.

Während jedes Arbeitszyklus führt die Kurventrommel 16 eine volle Umdrehung aus und treibt dabei, wie oben erwähnt, über Hebelgetriebe die beweglichen Werkzeugteile 20, 22 und 24 sowie die Einschliessstempel 40 an. Der schrittweise Drehantrieb zum Weiterschalten des Statorblechpakets 48 jeweils nach dem Isolieren zweier Nuten wird ebenfalls von der Kurventrommel 16 abgeleitet. Hierzu dient in bekannter Weise ein in Fig. 3 und 4 gezeigtes Malteserkreuzgetriebe, wie es auch bereits in der US-PS 2 340 291 beschrieben ist. Dabei ist ein Malteserkreuz 50 drehfest mit einer neben der Kurventrommel 16 und parallel zu dieser gelagerten Malteserkreuzwelle 52 verbunden. An der die Kurventrommel 16 tragenden, mit 54 bezeichneten Hauptwelle ist in exzentrischer Lage eine Mitnehmerrolle 56 angebracht, die in üblicher Weise bei einer Umdrehung der Hauptwelle 54 jeweils in eine von mehreren radialen Nuten 58 im Malteserkreuz 50 eintritt und dieses um einen bestimmten Winkelschritt dreht. Während sich die Mitnehmerrolle 56 nicht in Eingriff mit einer radialen Nut 58 befindet, sperrt die Hauptwelle 54 durch Eingriff in Randausnehmungen 60 des Malteserkreuzes dieses gegen Drehung. Die Hauptwelle 54 ist jedoch, wie Fig. 4 zeigt, derart ausgeschnitten, dass sie das Malteserkreuz 50 solange nicht verriegelt, wie es durch die Mitnehmerrolle 56 formschlüssig mitgeführt wird. Die schrittweise Drehbewegung der Malteserkreuzwelle 52 wird gemäss Fig. 5 normalerweise über ein einziges Paar Wechselräder 62, 64, von denen das letztere an einer verschwenkbaren Schere 66 gelagert und mit einem weiteren Zahnrad 68 drehfest verbunden ist, welches mit einem drehfest mit der das Statorblechpaket 48 tragenden Werkstückaufnahme 70 verbundenen Zahnrad 72 kämmt, entsprechend der gewählten Übersetzung der Zahnräder 62, 64 und 68, 72 auf das Statorblechpaket 48 übertragen.

Die Besonderheit gemäss der Erfindung besteht darin, dass zusätzliche mechanische, sehr einfache Mittel vorgesehen sind, die absolut zuverlässig wirken, um in einem bestimmten Rhythmus die Zahnradübersetzung zwischen der Malteserkreuzwelle 52 und der Werkstückaufnahme 70 umzuschalten. Zu diesem Zweck ist an der Kurventrommel 16 eine zusätzliche Schaltkurve 74 angebracht, und die Malteserkreuzwelle 52 ist um ein bestimmtes Mass axial verschieblich, welches ausreicht, die beiden Wechselräder 62, 64 ausser Eingriff und stattdessen zwei weitere, drehfest mit der Malteserkreuzwelle 52 bzw. dem Zahnrad 68 verbundene Wechselräder 76, 78 in Eingriff zu bringen. Hierzu wird die Malteserkreuzwelle 52 aus der Stellung nach Fig. 5 nach unten verschoben, bis das auf ihr befestigte Zahnrad 76 die strichpunktierte Lage einnimmt.

Da das Malteserkreuz 50 bei der axialen Verschiebung der Malteserkreuzwelle 52 nicht mitverschoben werden darf, sitzt unten auf der Malteserkreuzwelle 52, fest aber auswechselbar mit dieser verbunden, eine Programmtrommel 80, die mit einer inneren zentralen Bohrung auf einer axial feststehenden Welle 82 gelagert ist, die das Malteserkreuz 50 trägt und ihrerseits mittels eines Lagers 84 an dem mit 86 bezeichneten Gehäuse gelagert ist. Die Lagerung der Programmtrommel 80 auf der axial feststehenden Welle 82 gestattet ebenso wie das in Fig. 5 mit 88 bezeichnete obere Lager der Malteserkreuzwelle 52 deren begrenzte axiale Verschieblichkeit. Die drehfeste, aber axial nachgiebige Kupplung zwischen dem Malteserkreuz 50 und der Malteserkreuzwelle 52 erfolgt über einen mit der Programmtrommel 80 verbundenen Mitnehmerring 90, der im Beispielsfall zwei Mitnehmerbolzen 92 trägt, die in passende exzentrische Bohrungen im Malteserkreuz 50 eingreifen.

Um die Malteserkreuzwelle 52 in jeder ihrer beiden vorbestimmten axialen Stellungen solange sicher zu halten, bis umgeschaltet werden soll, ist die axial feststehende Welle 82 mit zwei Ringnuten versehen, von denen in Fig. 3 nur die untere gezeigt und mit 94 bezeichnet ist. Der Abstand zwischen den beiden Ringnuten entspricht dem Mass der axialen Verschieblichkeit der Malteserkreuzwelle 52. Innen in der Programmtrommel 80 oder dem mit dieser fest verbundenen Mitnehmerring 90 ist eine nicht gezeigte Kugel gelagert, die durch eine Feder gegen die feststehende Welle 82 angedrückt wird und in den axialen Endstellungen der Malteserkreuzwelle 52 jeweils in eine der Ringnuten 94 einrastet.

Gemäss Fig. 3 und 4 ist die Programmtrommel 80 mit zwei mit axialem Zwischenabstand angeordneten, gleichmässig über den Umfang verteilten Gruppen radialer Gewindebohrungen 96 versehen, in die wahlweise Lagerbolzen mit darauf gelagerten Mitnehmerrollen 98 eingeschraubt werden können. Die Anzahl der Bohrungen 96 in jeder ringförmigen Reihe entspricht der Anzahl der Schaltstellungen des Malteserkreuzes 50, und zwar ist die Anordnung so getroffen, dass jeweils in jeder Ruhestellung des Malteserkreuzes 50 eine Bohrung 96 jeder Reihe gemäss Fig. 4 auf der Verbindungsebene zwischen den Mittelachsen des Malteserkreuzes und der Hauptwelle 54 liegt, so dass eine an dieser Bohrung 96 befestigte Kurvenrolle 98 zur Kurventrommel 16 weist und von der Schaltkurve 74 erfasst werden kann. Von den beiden Bohrungen 96, die gleichzeitig auf die Kurventrommel 16 ausgerichtet sind, trägt höchstens eine, manchmal auch keine eine Kurvenrolle 98.

Die Schaltkurve 74 ist derart ausgebildet, dass sie in allen Drehwinkelstellungen der Kurventrommel 16 so nahe an die Programmtrommel 80 herangeführt ist, dass sie eine in die obere oder untere Reihe von Bohrungen eingesetzte Kurvenrolle am Umfang erreichen kann. Derjenige Umfangsbereich der Schaltkurve 74, der sich während der Schaltbewegung des Malteserkreuzes 50 an der Programmtrommel 80 vorbeibewegt, ist so schmal, d.h. hat eine so geringe Höhe, dass er weder in der einen noch in der anderen axialen Endstellung der Malteserkreuzwelle 52 und der Programmtrommel 80 eine von deren Kurvenrollen 98 berührt, unabhängig davon, ob sich diese in der oberen oder unteren Reihe befindet. Erst nachdem das Malteserkreuz 50 nach einer Drehschaltbewegung wieder eine seiner Ruhestellungen einnimmt, während die Kurventrommel 16 weiterdreht, gelangt eine in Fig. 3 bei 100 gezeigte, nach oben und unten symmetrische Verdikkung der Schaltkurve 74 in die unmittelbare Nähe der Programmtrommel 80. Wenn nun gerade dort, zur Kurventrommel 16 hinweisend, in die obere oder untere Bohrungsreihe eine Kurvenrolle 98 eingesetzt ist, so wird diese von der Verdikkung 100 erfasst und dadurch die Programmtrommel 80 und Malteserkreuzwelle 52 nach oben bzw. unten verschoben, bis die erwähnte Rastkugel wieder in eine der Ringnuten 94 einrastet. Dieser Schaltvorgang zum Umschalten der Getriebeverbindung von den Wechselrädern 62, 64 auf die Wechselräder 76, 78 oder umgekehrt muss beendet sein, bevor bei weiterer Umdrehung der Kurventrommel 16 das Malteserkreuz 50 weitergeschaltet wird, damit niemals die axiale und die Drehbewegung der Malteserkreuzwelle 52 gleichzeitig stattfinden.

Wie aus Fig. 4 hervorgeht, brauchen nicht in allen Schaltstellungen des Malteserkreuzes 50 Kurvenrollen 98 zur Kurventrommel 16 hin zu weisen, sondern nur in denjenigen Schaltstellungen, in welchen zwischen zwei Drehschaltbewegungen des Statorblechpakets 48 eine Umschaltung zwischen den Wechselrädern stattfinden soll, deren Übersetzungsverhältnis dann jeweils dafür massgebend ist, um welchen Winkelschritt das Statorblechpaket 48 bei der nächsten Drehschaltbewegung weitergedreht wird.

Vorzugsweise wird durch die axiale Schaltbewegung der Malteserkreuzwelle 52 auch ein nicht gezeigter elektrischer Schalter betätigt, welcher in der unteren axialen Stellung, bei welcher sich die Wechselräder 76 und 78 in Eingriff befinden, die bewirken, dass das Statorblechpaket 48 bei der Schaltbewegung des Malteserkreuzes 50 einen grossen Drehschaltschritt ausführt, den Antriebsmotor der Hauptwelle 54 für die Dauer der Drehschaltbewegung auf eine reduzierte Geschwindigkeit umschaltet, denn die Drehschaltbewegungen des Statorblechpakets sind schon normalerweise sehr schnell, und es empfiehlt sich daher, bei grossen Schaltschritten die Beschleunigungskräfte in Grenzen zu halten.

Es versteht sich, dass die Malteserkreuzwelle 52 auch aufgrund elektronischer Steuersignale mittels eines dadurch gesteuerten Schaltservos axial geschaltet werden könnte, oder in anderer Weise, z.B. mittels umschaltbarer Kupplungen, die Zahnradübersetzung zwischen der Malteserkreuzwelle und der Werkstückaufnahme 70 geändert werden könnte. Die vorstehend beschriebene Umschaltung mittels einer zusätzlichen Schaltkurve 74 auf der Kurventrommel 16 mit formschlüssigem Angriff an den Kurvenrollen 98 der mit der Malteserkreuzwelle 52 verbundenen Programmtrommel 80 hat den Vorteil, dass bei dieser Vorrichtung, wo die funktionsnotwendigen Bewegungen des Werkstücks und der Werkzeugteile in bestimmter Reihenfolge nacheinander ausgeführt werden müssen und auf keinen Fall gleichzeitig stattfinden dürfen, Fehlsteuerungen, welche die Maschine zerstören würden, mit Sicherheit vermieden werden.

**Patentansprüche**

1. Verfahren zum Auskleiden der Nuten von Stator- oder Rotorblechpaketen für elektrische Maschinen mit Isolierhülsen, wobei von einem Isoliermaterial-Vorratsstreifen (34) Abschnitte entsprechend der Abwicklungslänge der Isolierhülsen abgetrennt, in eine dem Nutquerschnitt entsprechende Form (26) gedrückt und axial in die Nuten eingeschoben werden, dadurch gekennzeichnet, dass bei jedem Arbeitstakt die Abwicklungslänge von zwei Isolierhülsen vom Vorratsstreifen (34) abgetrennt wird und beide Isolierhülsen gleichzeitig geformt und in Nuten eingeschoben werden.

2. Verfahren nach Anspruch 1, dadurch gekennzeichnet, dass die beiden Isolierstreifenabschnitte parallel zueinander und zu der Symmetrieebene der beiden Nuten in die Form (26) gedrückt werden.

3. Verfahren nach Anspruch 2, dadurch gekennzeichnet, dass der vom Vorratsstreifen (34) abgetrennte Isolierstreifenabschnitt während der Formung der beiden Isolierhülsen in der Symmetrieebene durchtrennt wird.

4. Verfahren nach Anspruch 2, dadurch gekennzeichnet, dass beim Schieben der Isolierhülsen aus der Form (26) in die Nuten auf dem Zwischenweg jeweils der äussere Schenkel der Isolierhülsen soweit an den inneren Schenkel herangeführt wird, bis die beiden Isolierhülsen mit den zugeordneten Nuten fluchten.

5. Verfahren nach Anspruch 1, dadurch gekennzeichnet, dass die beiden gleichzeitig ausgekleideten Nuten den dreifachen Nuten-Teilungsabstand voneinander haben und das Stator- oder Rotorblechpaket nach jedem Arbeitstakt relativ zur Form um den doppelten Teilungsabstand gedreht wird.

6. Vorrichtung zur Durchführung des Verfahrens nach einem der Ansprüche 1 bis 5 mit einem Formwerkzeug, bestehend aus einer Matrize (18) und einer Stempelplatte (14) mit einem Formstempel (20), sowie aus einem quer zu diesem bewegbaren Einschliessstempel (40) zum Schieben der Isolierhülsen aus der Matrize (18) in die Nuten, dadurch gekennzeichnet, dass an der Stempelplatte (14) zwei Formstempel (20) und dazwischen eine Schneidplatte (24) angebracht sind, in der Matrize (18) zwei Formnuten (26) ausgebildet und die darin geformten Isolierhülsen gleichzeitig durch zwei Einschiessstempel (40) in zwei Nuten (46) des Stator- oder Rotorblechpakets (48) einführbar sind.

7. Vorrichtung nach Anspruch 6, dadurch gekennzeichnet, dass zwischen dem Formwerkzeug (18, 20) und dem Stator- oder Rotorblechpaket (48) ein Formelement (44) mit Schrägflächen (42) angeordnet ist, durch welche wenigstens die äusseren Schenkel der Isolierhülsen in Flucht mit den zugeordneten Nuten (46) des Stator- oder Rotorblechpakets (48) zu bringen sind.

8. Vorrichtung nach Anspruch 6, dadurch gekennzeichnet, dass beim Formvorgang die Schneidkante der zwischen den Formstempeln (20) angeordneten Schneidplatte (24) deren Vorderkanten nacheilt.

9. Vorrichtung nach Anspruch 6, dadurch gekennzeichnet, dass der Nutgrund der Formnuten (26) mit dem Nutgrund zweier Nuten (46) in dem Stator- oder Rotorblechpaket (48) fluchtet, welche dreifachen Teilungsabstand haben.

10. Vorrichtung nach Anspruch 6, dadurch gekennzeichnet, dass sie eine bei jedem Schneid- und Formvorgang eine Umdrehung ausführende Kurventrommel (16) mit Steuerkurven für Form- und Einschliessstempel (20, 40) und ein über einen Malteserkreuzantrieb (50, 56) angetriebenes Schaltgetriebe (62, 64; 76, 78) aufweist und zur Einstellung zweier unterschiedlicher Drehzahlverhältnisse zwischen der Kurventrommel (16) und einer das Stator- oder Rotorblechpaket (48) tragenden Werkstückaufnahme (70) das Schaltgetriebe (62, 64; 76, 78) durch eine Schaltkurve (74) an der Kurventrommel (16) umschaltbar ist.

11. Vorrichtung nach Anspruch 10, dadurch gekennzeichnet, dass die die Schaltbewegung ausführenden Getrieberäder (62, 76) des Schaltgetriebes drehfest auf einem axial verschieblichen Teil (52) der Malteserkreuzwelle (52, 82) sitzen, an welchem, über den Umfang verteilt, mehrere abwechselnd mit der Schaltkurve (74) zusammenwirkende, sich radial erstreckende Mitnehmer (98) jeweils in einer von zwei unterschiedlichen axialen Positionen befestigbar sind, und diese Mitnehmer (98) je nach ihrer axialen Position an einer von zwei gegenüberliegenden, axial gegenläufigen Führungsflächen (100) der Schaltkurve (74) zur Anlage kommen.

12. Vorrichtung nach Anspruch 11, dadurch gekennzeichnet, dass der axial bewegliche Teil (52, 80) der Malteserkreuzwelle (52, 82) durch eine federbelastete Rasteinrichtung jeweils solange in einer durch die Schaltkurve (74) über einen Mitnehmer (98) eingestellten axialen Lage gehalten ist, bis sie ein weiterer Mitnehmer (98) in die andere axiale Lage verschiebt.

13. Vorrichtung nach Anspruch 10, dadurch gekennzeichnet, dass gleichzeitig mit der Umschaltung des Schaltgetriebes (62, 64; 76, 78) die Drehzahl des Antriebsmotors der Kurventrommel (16) umschaltbar ist.

**Claims**

1. Method for lining the slots of laminated stator or rotor cores for electrical machines with slot liners, in which sections corresponding to the unwound length of the slot liners are separated from an insulating material supply strip (34), pressed into a mould (26) corresponding to the slot cross section and inserted axially in the slots, characterised in that the unwound length of two slot liners is separated from the supply strip (34) and both slot liners are simultaneously moulded and inserted in slots during each operating cycle.

2. Method according to claim 1, characterised in that the two insulating strip sections are pressed into the mould (26) parallel to one another and to the plane of symmetry of the two slots.

3. Method according to claim 2, characterised in that the insulating strip section separated from the supply strip (34) is severed in the plane of symmetry while the two slot liners are moulded.

4. Method according to claim 2, characterised in that, when the slot liners are pushed out of the mould (26) into the slots, the outer side of the slot liners is in each case brought towards the inner side during this movement until the two slot liners are in alignment with the associated slots.

5. Method according to claim 1, characterised in that the two simultaneously lined slots are spaced by three times the slot pitch and the laminated stator or rotor core is turned relative to the mould by twice the pitch after each operating cycle.

6. Device for carrying out the method according to one of claims 1 to 5, comprising a moulding tool consisting of a female die (18) and a die plate (14) with a male die (20), and of an insertion ram (40), which can be moved at a right angle to the latter, for pushing the slot liners out of the female die (18) into the slots, characterised in that two male dies (20) and between these a cutting die (24) are attached to the die plate (14), two mould slots (26) are formed in the female die (18) and the slot liners moulded in these can be simultaneously inserted by two insertion rams (40) in two slots (46) of the laminated stator or rotor core (48).

7. Device according to claim 6, characterised in that a moulding element (44) with inclined surfaces (42) is arranged between the moulding tool (18, 20) and the laminated stator or rotor core (48), by means of which element at least the outer sides of the slot liners can be brought into alignment with the associated slots (46) of the laminated stator or rotor core (48).

8. Device according to claim 6, characterised in that the cutting edge (24) of the cutting die (24), which is arranged between the male dies (20), lags behind the latters front edges during the moulding operation.

9. Device according to claim 6, characterised in that the bottom of the mould slots (26) is in alignment with the bottom of two slots (46) in the laminated stator or rotor core (48) which are on a triple pitch.

10. Device according to claim 6, characterised in that it comprises a barrel cam (16), which rotates once during each cutting and moulding operation, with control cams for the male die (20) and insertion ram (40), and a change-speed gear (62, 64; 76, 78) can be switched over by a change-speed cam (74) on the barrel cam (16) in order to set two different speed ratios between the barrel cam (16) and a workpiece holder (70) bearing the laminated stator or rotor core (48).

11. Device according to claim 10, characterised in that the gearwheels (62, 76), which effect the change-over movement, of the change-speed gear are mounted in a non-rotatable manner on an axially displaceable part (52) of the Maltese cross shaft (52, 82), to which part a plurality of radially extending drivers (98), which are distributed over the circumference and co-operate alternately with the changespeed cam (74), are in each case secured in one of two different axial positions, and these drivers (98) come to bear against one of two opposite guide surfaces (100), extending in opposite axial directions, of the change-speed cam (74), according to their axial position.

12. Device according to claim 11, characterised in that the axially mobile part (52, 80) of the Maltese cross shaft (52, 82) is in each case held by a spring-loaded locking device in one axial position, which is set by the change-speed cam (74) via a driver (98), until another driver (98) moves it into the other axial position.

13. Device according to claim 10, characterised in that the speed of the drive motor of the barrel cam (16) can be switched over at the same time as the change-speed gear (62, 64; 76, 78) is switched over.

## Revendications

1. Procédé de revêtement des encoches de paquets de tôles de stators ou rotors de machines électriques à l'aide de gaines isolantes, dans lequel des coupes de bande isolante (34) prélevées d'une réserve de matériel d'isolation et correspondant à la longueur développée des gaines isolantes, sont chassées dans une forme (26) correspondant au profil de l'encoche, puis sont glissées axialement dans les encoches, caractérisé par le fait que lors de chaque cycle de travail, une longueur développée correspondant à deux gaines isolantes est détachée de la bande de réserve (34) et que les deux gaines isolantes sont façonnées simultanément et introduites dans les encoches.

2. Procédé selon la revendication 1, caractérisé par le fait que les deux coupes de bande isolante sont chassées dans les formes (26) parallèlement entre elles et au plan de symétrie des deux encoches.

3. Procédé selon la revendication 2, caractérisé par le fait qu'au cours du façonnage des deux gaines isolantes, la longueur de bande de réserve (34) détachée est sectionnée dans le plan de symétrie.

4. Procédé selon la revendication 2, caractérisé par le fait qu'à mi-chemin du glissement des gaines isolantes hors de la forme (26) en direction des encoches, l'aile extérieure des gaines isolantes est ramenée vers l'aile intérieure jusqu'à ce que les deux gaines isolantes soient alignées avec les encoches correspondantes.

5. Procédé selon la revendication 1, caractérisé par le fait que les deux encoches revêtues simultanément sont distantes d'un triple pas d'encoche, et que le paquet de tôles de stator ou rotor subit lors de chaque cycle de travail une rotation par rapport à la forme correspondant à un double pas d'encoche.

6. Dispositif pour la réalisation du procédé selon l'une des revendications 1 à 5 au moyen d'un outil de façonnage consistant en une matrice (18) et une plaque à poinçons (14) portant un poinçon profilé (20), ainsi que perpendiculairement à ce dernier un poinçon de chasse (40) servant à pousser les gaines isolantes hors de la matrice dans les encoches, caractérisé par le fait que la plaque porte-poinçon est garnie de deux poinçons profilés (20) et qu'entre les deux est prévue une plaquette de coupe (24), que dans la matrice (18) sont prévues deux encoches profiliées, et que les gaines isolantes qui y sont façonnées sont introduites simultanément grâce à deux poinçons de chasse (40) dans deux encoches (46) du paquet de tôles de stator ou rotor (46).

7. Dispositif pour la réalisation du procédé selon la revendication 6, caractérisé par le fait qu'entre l'outil de façonnage (18,20) et le paquet de tôles de stator ou rotor (48) se trouve un élément de déformation (44) à pans inclinés (42), grâce auxquels au moins les ailes extérieures des gaines isolantes sont amenées en alignement avec les encoches correspondantes (46) du paquet de tôles de stator ou rotor (48).

8. Dispositif selon la revendication 6, caractérisé par le fait que lors du processus de façonnage, l'arête coupante de la plaquette de coupe (24) prévue entre les poinçons de façonnage (20) est décalée en retrait par rapport à ces derniers.

9. Dispositif selon la revendication 6, caractérisé par le fait que la base des encoches de façonnage (26) est alignée avec la base d'encoche des deux encoches (46) du paquet de tôles de stator ou rotor (48) espacées d'un triple pas d'encoche.

10. Dispositif selon la revendication 6, caractérisé par le fait qu'il est prévu lors de chaque cycle de coupe et de façonnage, une révolution d'un tambour à cames (16), avec des cames de commande des poinçons de façonnage et de chasse (20, 40) et un mécanisme à croix de Malte (50, 56) d'entraînement du réducteur de commande (62, 64; 76, 78), et que pour l'obtention de deux différents rapports de démultiplication entre le tambour à cames (16) et un plateau porte-pièce (70) supportant le paquet de tôles de stator ou rotor (48), le réducteur de commande (62, 64; 76, 78) est commutable à l'aide d'une came (74) prévue sur le tambour à cames (16).

11. Dispositif selon la revendication 10, caractérisé par le fait que les engrenages (62, 76) du réducteur de commande des mouvements du cycle d'opérations sont calés sur une partie (52) pouvant coulisser axialement de l'axe de la croix de Malte (52, 82), sur laquelle sont répartis à la périphérie plusieurs tocs d'entraînement radiaux (98), pouvant être fixés en deux niveaux axiaux différents chacun, ces tocs d'entraînement (98) coopérant suivant leur position axiale avec deux surfaces de guidage axiales opposées (100) solidaires de la came de commande (74).

12. Dispositif selon la revendication 11, caractérisé par le fait que la partie mobile axialement (52, 80) de l'axe de la croix de Malte (52, 82) est maintenue durablement par l'intermédiaire d'un système de crantage sous tension de ressort, dans la position axiale définie par la came de commutation (74) et un des tocs d'entraînement (98), jusqu'à ce qu'un autre toc d'entraînement (98) la fait coulisser dans l'autre position axiale.

13. Dispositif selon la revendication 10, caractérisé par le fait que simultanément avec la commutation des engrenages du réducteur (62, 64; 76, 78), la vitesse du moteur de commande du tambour à cames (16) est commutable.

FIG.1

FIG. 2

FIG.3

FIG.4

FIG. 5

17